# EUROPEAN PATENT SPECIFICATION

(11) **EP 3 045 040 B1**
(45) Date of publication and mention of the grant of the patent: **29.11.2017**
(21) Application number: 14893690.9
(22) Date of filing: 11.12.2014
(51) Int. Cl.: A01K 85/16

(54) **FISHING LURE**
KÖDER
LEURRE DE PÊCHE

(43) Date of publication of application: 20.07.2016
(73) Proprietor: Duel Co., Inc., Fukuoka-shi, Fukuoka 812-0024 (JP)
(72) Inventor: CHOI, Eric Eun-Ha, Fukuoka-shi, Fukuoka 812-0024 (JP)
(74) Representative: Zimmermann & Partner Patentanwälte mbB
(86) International application number: PCT/JP2014/082837
(87) International publication number: WO 2016/092668

(56) References cited:
- CN-U- 203 206 993
- JP-A- H10 248 438
- JP-A- 2004 121 115
- JP-A- 2005 095 103
- JP-A- 2005 287 360
- JP-A- 2012 231 699
- JP-U- 3 160 473

## Description

### TECHNICAL FIELD

The present invention relates to a lure having a sinker movably stored in a body, the sinker moving in a forward and rearward direction to change the center of gravity of the lure.

### BACKGROUND ART

A Lure is a kind of fishing gear for fishing. The lure is classified into various types according to how to catch a fish. Among them, a certain type of lure of which the center of gravity changes has been known (Refer to Patent documents 1 and 2). Such lure is also referred to as a center of gravity shift lure.

A sinker moves in a passage formed in a body of such lure, thereby shifting the center of gravity of the lure back and forth. Describing in detail, in a normal state, the sinker in the lure is attracted and held in a front section of the passage by a magnetic attracting force. In the lure in which the sinker is held in the front section, its center of gravity is deviated to the front. When the lure is cast, the sinker moves backward away from the front section of the passage due to an inertial force. When the sinker moves to a rear section of the passage, the center of gravity of the lure is deviated to the rear, leading to stable flight of the lure. Then, when the lure lands on the water, the sinker moves forward and is attracted and held in the front section of the passage again. After landing on the water, when the user draws the lure with the center of gravity deviated to the front, the lure swims like a fish. Casting means that the lure is coupled to an end of a line wound around a reel attached to a rod, and the rod is shook, thereby shooting the lure while unreeling the line.

As described above, this type of lure is configured to hold the sinker at the front section after landing on the water, and move the sinker backward at casting.

For example, a lure described in Patent Document 1 includes a body, a passage extending in the body in a forward and rearward direction, a spherical sinker stored in the passage to be movable in the forward and rearward direction, and a retainer (e.g. magnet) attracting the sinker by a magnetic attracting force, and the retainer is provided at a front end surface constituting the passage.

A lure described in Patent Document 2 includes a body, a passage extending in the body in a forward and rearward direction, a spherical sinker stored in the passage to be movable in the forward and rearward direction, and a retainer (e.g. magnet) attracting the sinker by a magnetic attracting force, and the retainer is provided at a front section of a circumferential wall constituting the passage.

With the lure described in Patent document 1, the sinker is attracted to the retainer provided at the front end surface of the passage, and is held in the front section of the passage. However, since the magnetic attracting force (magnetic force) acts in the forward and rearward direction in the lure, the inertial force of the sinker and the magnetic attracting force are applied in the same direction, resulting in that the sinker may remain on the retainer at casting (that is, the sinker does not move backward from the front at casting). In addition, since the retainer is provided at the front end surface of the passage, when the sinker moves to the front in the passage and hits against the front end surface, the retainer may be damaged. Moreover, in storing a plurality of sinkers in the passage, all of the sinkers must be made of a magnetic material and thus, a sinker made of a non-magnetic material such as tungsten cannot be used.

With the lure described in Patent Document 2, the sinker is attracted to the retainer provided on the circumferential wall of the passage, and is held in the front section of the passage. Since the direction of the inertial force of the sinker in the lure is orthogonal to the direction of the magnetic attracting force, the sinker is easily separated from the retainer at casting. However, while the lure is drawn and swimming after landing on the water, the sinker may be separated from the retainer and the center of gravity may move to the rear. Especially in recent years, the fishing style in which the lure is fiercely moved from right to left and up and down has become popular. Such fierce action easily separates the sinker from the retainer. In regard to this point, when a relatively large retainer is used, the magnetic attracting force increases accordingly, and the sinker can be hardly separated from the retainer. However, when making the retainer large, weight of the retainer increases. As a result, even when the sinker moves rearward, the center of gravity of the lure is insufficiently deviated to the rear. Further, with the lure described in Patent Document 2, since the retainer is provided at the circumferential wall, the thickness of the circumferential wall must be increased to correspond to the large retainer.
[Patent Document 1] JP H03-15021 Y2
[Patent Document 2] JP 2747502 B2

The Patent Document JP 2005 287360 A describes a lure housing two weights, which are freely movable in a body of the lure. Each weight has a move-guiding part and the weights are able to stick together by a magnetic force to restrict the movement of them.

### SUMMARY OF THE INVENTION

An object of the present invention is to provide a lure in which a sinker moves rearward in a passage at casting, and is held in a front section of the passage after landing on the water.

A lure according to the present invention includes the technical features of independent claim 1. Preferred embodiments are set out in the dependent claims.

In a preferable lure according to the present invention, the passage has a first path located in front of the stepped portion, a second path located in rear of the stepped portion, and a communicating path communicating the first path with the second path, and the catching surface is inclined relative to a bottom of the first path.

In a preferable lure according to the present invention, the communicating path is dimensioned to pass only one sinker therethrough.

In a preferable lure according to the present invention, an inclination angle of the catching surface relative to the bottom is 90 degrees or more and 140 degrees or less.

In a preferable lure according to the present invention, two or more individual sinkers are stored in the passage side by side in the forward and rearward direction, and at least the rearmost sinker of the sinkers is made of a magnetic material or a magnet.

With the lure of the present invention, the sinker reliably moves rearward in the passage at casting, and is reliably held in the front section of the passage after landing on the water. The lure can be stably cast, and caused to suitably swim in the water.

### BRIEF DESCRIPTION OF THE DRAWINGS

Fig. 1 is a side view of the lure according to a first embodiment of the present invention.
Fig. 2 is a front view of the lure when viewed from front.
Fig. 3 is a side sectional view taken along a line III-III in Fig. 2.
Fig. 4 is an enlarged side sectional view of a main part of the lure in Fig. 3.
Fig. 5 is a side sectional view of the lure in Fig. 4 with a sinker not illustrated.
Fig. 6 is a vertical sectional view of the lure taken along a line VI-VI in Fig. 4.
Fig. 7 is a vertical sectional view of the lure taken along a line VII-VII in Fig. 4.
Fig. 8 is a horizontal sectional view of the lure taken along a line VIII-VIII in Fig. 4.
Fig. 9 is a vertical sectional view of the lure in Fig. 7 with a sinker not illustrated.
Fig. 10 is an exploded perspective view of each member constituting the lure.
Fig. 11 is a side sectional view of the lure in the state where the sinker moves rearward in the passage (taken along a line III-III in Fig. 2).
Fig. 12 is a side sectional view of a lure according to a second embodiment (taken along the line III-III in Fig. 2. The same also applies to Fig. 13 to Fig. 18).
Fig. 13 is a side sectional view of the lure according to a third embodiment.
Fig. 14 is an enlarged side sectional view of a main part of the lure according to a fourth embodiment (sinker is not illustrated).
Fig. 15 is an enlarged side sectional view of a main part of the lure according to a fifth embodiment.
Fig. 16 is a side sectional view of the lure according to a first example of a sixth embodiment.
Fig. 17 is a side sectional view of the lure according to a second example of the sixth embodiment.
Fig. 18 is a side sectional view of the lure according to a third example of the sixth embodiment.
Fig. 19 is a vertical sectional view of the lure according to a seventh embodiment (the lure according to a seventh embodiment taken along the same line VII-VII in Fig. 4. Sinkers are not illustrated).
Fig. 20 is a side sectional view of the lure according to a eighth embodiment.
Fig. 21 is a horizontal sectional view of the lure according to a tenth embodiment (the lure according to a tenth embodiment taken along the same line VIII-VIII in Fig. 4).
Fig. 22 is a vertical sectional view taken along a line XXII-XXII in Fig. 21.

A lure of the present invention will be described below with reference to figures.

As terms indicating direction in this specification, "front" refers to the side toward which the lure advances when the lure drawn through a line in the water, "rear" refers to the side opposite to the side toward which the lure advances, "up" refers to the upper side in the vertical direction orthogonal to the forward and rearward direction, and "down" refers to the lower side in the vertical direction. In each of side views and side sectional views, the front of the lure faces the left, the rear faces the right, and the forward and rearward direction is parallel to a horizontal plane. The horizontal plane refers to a plane vertical to the direction in which the center of gravity affects the lure.

### <First embodiment>

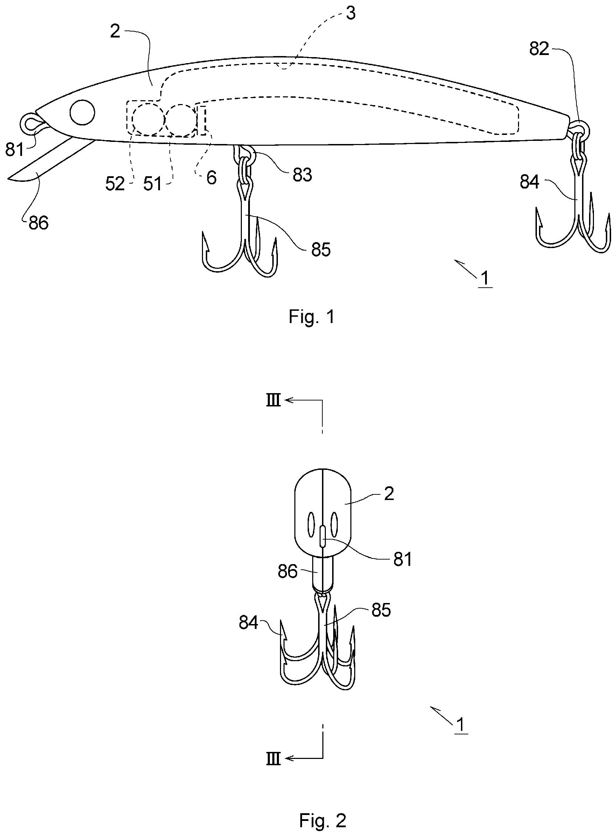

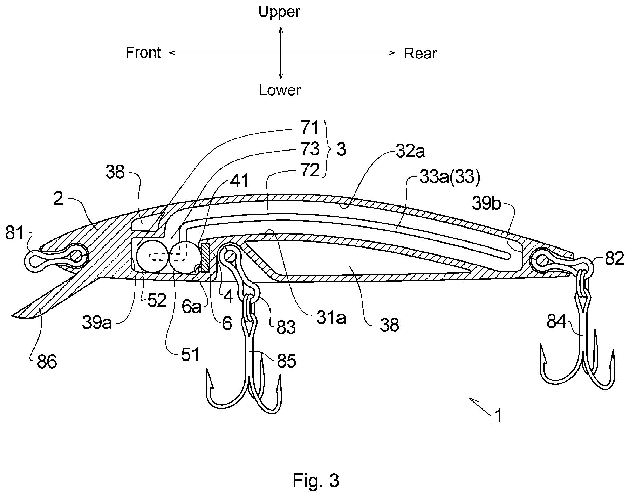

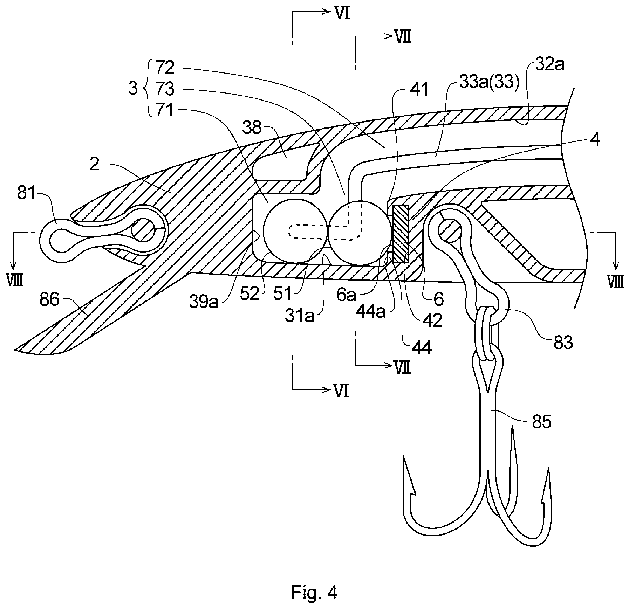

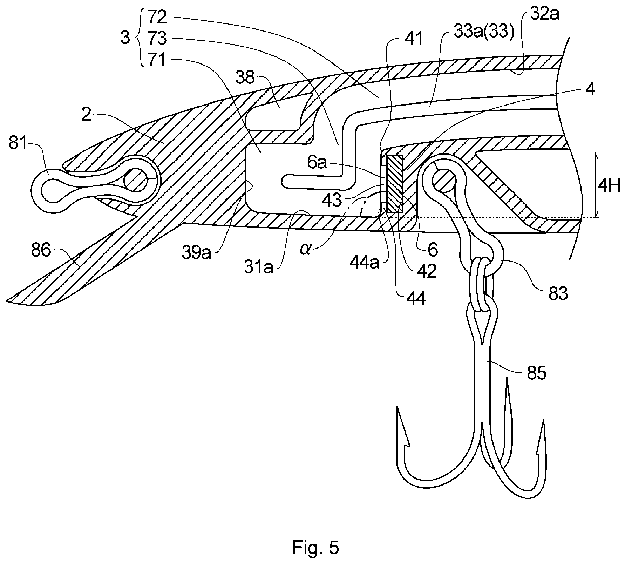

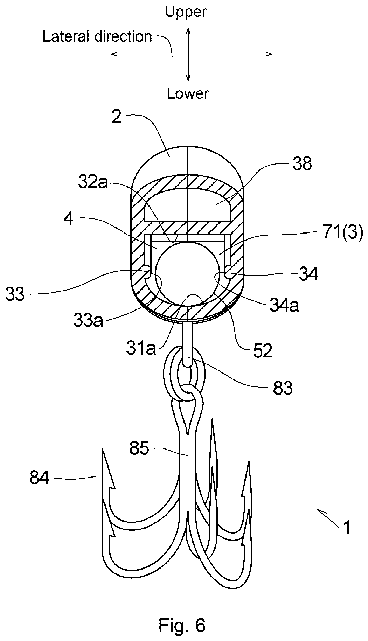

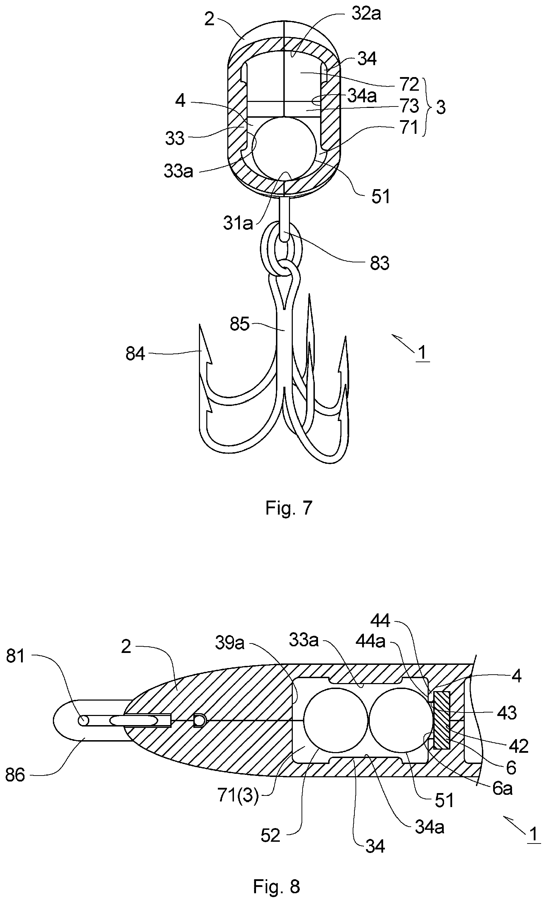

Fig. 1 is a side view of the lure according to a first embodiment of the present invention, and Fig. 2 is a front view of the lure when viewed from front. Fig. 3 is a sectional view from side taken along a line III-III in Fig. 2. Fig. 4 is an enlarged view of a necessary part in Fig. 3, and Fig. 5 is a view of the lure in Fig. 4 with a sinker omitted. Fig. 6 and Fig. 7 are sectional views of the lure when viewed from front taken along a line VI-VI and a line VII-VII in Fig. 4. Fig. 8 is a sectional view of the lure when viewed from up above taken along a line VIII-VIII in Fig. 4. However, in each of the sectional views, places corresponding the sinker, line connecting portions, hooks, and hook connecting portions are not hatched.

In Fig. 1 to Fig. 8, a lure 1 of the present invention includes a body 2, a passage 3 provided in the body 2, a stepped portion 4 provided in the middle of the passage 3, a sinker 51 stored in the passage 3 to be movable in a forward and rearward direction, and a retainer 6 that can attract the sinker 51.

The passage 3 has a bottom, and extends in a first direction of the body 2. One sinker or two or more (plural) individual sinkers 51 are stored in the passage 3. The retainer 6 is formed of a magnet or a magnetic material, and can attract the sinker 51 by the magnetic attracting force. The stepped portion 4 has a catching surface opposed to the front of the body 2. In the first embodiment, a surface 6a of the retainer 6 constitutes the catching surface.

Each constituent of the lure 1 in the first embodiment will be described below in detail.

### [Sinker]

The sinker is stored in the passage 3 to be movable in a forward and rearward direction. Accordingly, the sinker can move in the passage 3 from the front to the rear, and from the rear to the front. The sinker hits against a front end surface 39a of the passage 3 when moving forward in the passage 3, and hits against a rear end surface 39b of the passage 3 when moving rearward in the passage 3. Only one sinker may be stored in the passage 3. Preferably, as illustrated, two or more individual sinkers 51, 52 are stored in the passage 3. In the illustrated example, the two individual sinkers 51, 52 are stored in the passage 3. In the case where the two or more sinkers 51, 52 are stored in the passage 3, the foremost sinker 52 hits against the front end surface 39a of the passage 3, and the rearmost sinker 51 hits against the rear end surface 39b of the passage 3.

The sinkers 51, 52 may have any shape as long as they can move in the passage 3, and are typically spherical as illustrated. The shape of the sinkers 51, 52 is not limited to spherical, and may be tubular, barrel-like, and so on. The spherical, tubular, or barrel-like sinkers 51, 52 move in a forward and rearward direction while rolling on the bottom of the passage 3.

The formation material for the sinkers 51, 52 is not limited, but is preferably, a material having a relatively large specific gravity. For example, the specific gravity of the sinkers 51, 52 is 6 or more, and preferably, 7 or more. In this specification, the specific gravity is based on water (reference material) of 4°C at atmospheric pressure.

In the case where the two or more sinkers 51, 52 are stored in the passage 3, the sinkers 51, 52 are aligned in the passage 3 side by side in the forward and rearward direction, and can individually move in a forward and rearward direction in the passage 3. At least the rearmost sinker 51 among the sinkers 51, 52 is made of a magnetic material or a magnet. In the case where the rearmost sinker 51 is made of the magnetic material, the remaining sinker 52 is made of the magnetic material or non-magnetic material. In the case where the rearmost sinker 51 is made of the magnet, the remaining sinker 52 is made of the non-magnetic material. In the case where the sinker 51 is made of the magnet and the sinker 52 is made of the magnetic material, or the sinker 51 is made of the magnetic material and the sinker 52 is made of the magnet, the sinkers (the sinker 51 and the sinker 52) attract each other, preventing their smooth movement in the passage 3.

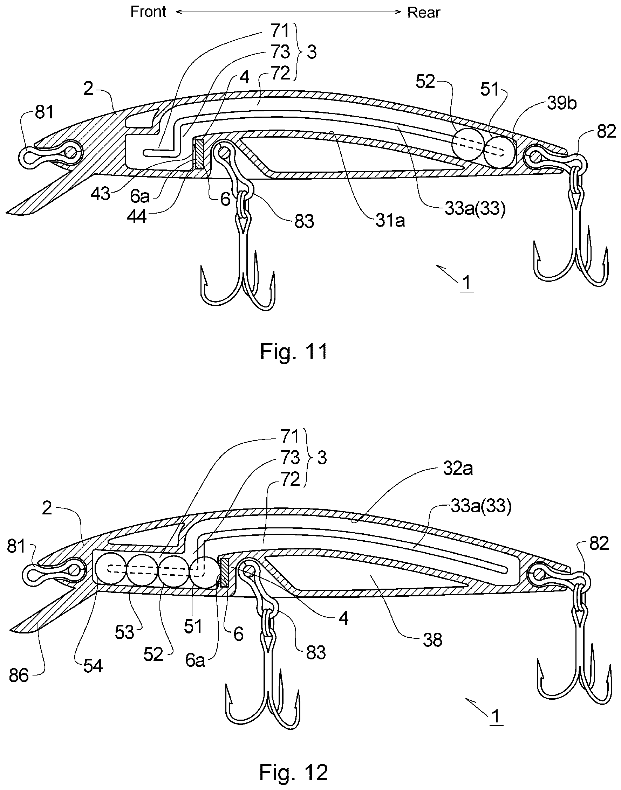

Preferably, the sinker 52 other than the rearmost sinker is made of a non-magnetic material, or the magnetic material magnetized more weakly than the rearmost sinker 51 (in other words, the rearmost sinker is made of the magnetic material magnetized more strongly than the remaining sinker), and more preferably, the sinker 52 other than the rearmost sinker is made of a non-magnetic material. In the case where two or more sinkers other than the rearmost sinker are present (for example, as in a lure as illustrated in Fig. 11), all of the sinkers may be made of a non-magnetic material, or at least one of the sinkers may be made of a non-magnetic material and remaining one or more sinkers may be made of the magnetic material (preferably, the magnetic material magnetized more weakly than the rearmost sinker).

The sinker 52 other than the rearmost sinker refers to sinker disposed in front of the rearmost sinker 51 in the passage 3. In the case where one sinker 51 is stored in the passage 3, the sinker 51 corresponds to the rearmost sinker, and is made of the magnetic material or the magnet.

In this specification, the "magnetic material" refers to a material magnetized near the magnet (that is, a material which sticks to the magnet), the "magnet" refers to an object having a magnetic field without receiving a magnetic field or current from the outside (an object attracting the magnetic material), and the "non-magnetic material" refers to a material that is not magnetized near the magnet (that is, a material which does not substantially stick to the magnet).

The magnetic material is not particularly limited, but typically includes iron group metals such as iron, nickel, and cobalt; alloys containing iron group metals, and oxides of iron group metals. Tungsten alloy may be used as the magnetic material. The magnetic material of the tungsten alloy is an alloy of tungsten and at least one of nickel, iron, and copper, and the alloy contains tungsten that is a main ingredient by 70 percent by mass or more, preferably 80 percent by mass or more. The magnetic material of the tungsten alloy is made by combining a required amount of tungsten and at least one of nickel, iron, and copper, sufficiently mixing them and then, sintering the mixture at high temperature that is equal to or lower than the melting point of the alloy. The magnetic material has a specific gravity of 6 or more, and a ferromagnetic property, which is preferable for the formation material for the sinker 51.

Examples of the magnet (permanent magnet) include ferrite magnet, alnico magnet, neodymium magnet, samarium-cobalt magnet, magnet steel, resin magnet, and rubber magnet. The resin magnet is made by molding resin mixed with metal and so on, and the rubber magnet is made by molding rubber mixed with metal and so on. The residual magnetic flux density and the coercive force of the magnet are not particularly limited. However, since the sinker tends to be separated from the retainer at casting and can be hardly separated from the retainer after landing on the water, the magnet has preferably, a residual magnetic flux density of 200 to 420mT and a coercive force of 220 to 300 A/m, and more preferably, a residual magnetic flux density of 205 to 400mT and a coercive force of 230 to 285 A/m. The residual magnetic flux density and the coercive force can be measured by using a gauss meter (manufactured by ADS. Inc. model: MODEL HGM-8900S).

The non-magnetic material is not particularly limited, and typically includes lead, copper, austenitic stainless, or tungsten. Among them, tungsten has a large specific gravity, which is suitable for the non-magnetic material.

For example, the rearmost sinker 51 is a steel ball (iron ball), and the sinker 52 other than the rearmost sinker is a tungsten ball.

Furthermore, in the case where the sinkers 51, 52 are spherical, tubular, or barrel-like, diameters of the sinker 51, 52 are not particularly limited, but they are usually about 2 mm or more to 15 mm or less, preferably about 3 mm or more and 10 mm or less. However, in the case where a plurality of sinkers 51, 52 is stored in the passage 3, each of the sinkers may have the same shape and dimension or have the same shape and different dimensions, for example.

### [Retainer]

The retainer 6 attracts the sinker 51 by the magnetic attracting force to hold the sinker 51 at the front section of the passage 3. The retainer 6 is formed of a magnet or a magnetic material. In the case where the rearmost sinker 51 is made of the magnetic material, the retainer 6 is formed of the magnet. In the case where the rearmost sinker 51 is formed of the magnet, the retainer 6 may be made of the magnet or the magnetic material, but is preferably made of the magnetic material. Consequently, as a preferable combination, (1) the rearmost sinker 51 is made of the magnetic material and the retainer 6 is formed of the magnet, or (2) the rearmost sinker 51 is formed of the magnet and the retainer 6 is made of the magnetic material.

The shape of the retainer 6 is not particularly limited. For example, the retainer is shaped like a plate having a predetermined thickness. The retainer 6 constitutes the catching surface of the stepped portion 4 in the passage 3, or is provided inner side from the catching surface, which will be described later in detail.

### [Attachment of body, stepped portion, passage, and retainer]

The outline of the illustrated body 2 imitates a small fish. However, the outline of the body 2 is not limited to the shape of the small fish, and may be changed to various shapes.

An infinite number of cavities (dimples) may be formed in the outer surface of the body 2 (not illustrated). Since the outer surface of the body 2 has an infinite number of small cavities, at casting of the lure 1, the lure 1 rarely receives air resistance. Therefore, the lure 1 which can be shot further is provided.

Preferably, the body 2 itself floats on the water (including fresh water and sea water). The specific gravity of the body 2 is not particularly limited, and may be 1.1 or less, for example, preferably 1 or less, more preferably 0.9 or less, and particularly preferably 0.6 or less. The specific gravity of the body 2 refers to the specific gravity of the body itself rather than the specific gravity of the formation material for the body.

The body 2 is made of a non-magnetic material.

The formation material for the body 2 is not particularly limited as long as the material is the non-magnetic material, and may be rigid synthetic resin such as ABS resin; soft synthetic resin such as urethane; synthetic resin foam such as urethane foam; wood; or a combination of two or more materials. The body 2 is preferably made of rigid synthetic resin, soft synthetic resin, synthetic resin foam, or a combination of two or more of them, and more preferably, made of rigid synthetic resin (including rigid synthetic resin foam). The body 2 may be hollow or solid. The solid body has no space therein except for the passage 3. For example, the illustrated body 2 has a hollow portion 38 that is a space other than the passage. That is, the illustrated body 2 is hollow. Due to the presence of the hollow portion 38 in the body 2, even when a material having a specific gravity of more than 1 (for example, ABS resin) is used, the body 2 having a specific gravity of less than 1, preferably a specific gravity of 0.9 or less can be readily manufactured.

The passage 3 extends in the body 2 in the first direction of the body 2. The "passage extends in the first direction" means that the passage extends substantially in that direction. For example, the first direction is the forward and rearward direction. In the case where the first direction is the forward and rearward direction, the passage 3 extends from the front to the rear of the body 2.

The passage 3 has a bottom in contact with the sinkers 51, 52. The bottom of the passage 3 is formed of an inner surface 31a of a lower wall of the body 2, and extends in the first direction (in the illustrated example, forward and rearward direction).

Specifically, the passage 3 is configured of an inner surface 32a of an upper wall, an inner surface 33a of a first side wall, an inner surface 34a of a second side wall, and an inner surface 31a of the lower wall of the body 2. In other words, the passage 3 is formed of a space surrounded with the inner surface 32a of the upper wall, the inner surface 33a of the first side wall, the inner surface 34a of the second side wall, and the inner surface 31a of the lower wall of the body 2. The passage 3 extends from the front to the rear section of the body 2.

The inner surfaces 32a, 33a, 34a, and 31a of the upper wall, the first side wall, the second side wall, and the lower wall of the body 2, which constitute the passage 3, each may be independent, smooth or have an inwardly-protruding portion. In the illustrated example, the inner surface 31a of the lower wall of the body 2 (corresponding to the bottom of the passage 3) and the inner surface 32a of the upper wall of the body 2 (corresponding to the top of the passage 3) each are smoothly formed. The first side wall and the second side wall of the body 2 are provided with inwardly-protruding guide rails 33, 34, respectively. The guide rails 33, 34 each are a long protrusion extending along the passage 3 in the forward and rearward direction. Inner surfaces (protruding top surfaces) of the guide rails 33, 34 correspond to the inner surface 33a of the first side wall and the inner surface 34a of the second side wall. The inner surface 33a of the first side wall and the inner surface 34a of the second side wall correspond to a first side portion and a second side portion of the passage 3, respectively. As described later, since the passage 3 including the stepped portion 4 is partially bent, the upper wall, the first side wall, the second side wall, the lower wall, and the guide rails of the body 2, which constitute the bent passage 3, are also bent in the same manner.

On condition that the sinkers 51, 52 stored in the passage 3 can smoothly move in the forward and rearward direction of the body 2, the vertical sectional form of the passage 3 is not particularly limited. In the state where the sinkers 51, 52 are in contact with the bottom of the passage 3, the passage 3 is formed so as to generate a small gap between the sinkers 51, 52 and the top of the passage 3 (see Fig. 4). Similarly, in the state where the sinkers 51, 52 are in contact with the bottom of the passage 3, the passage 3 is formed so as to generate a small gap between the sinkers 51, 52 and the first and second side portions of the passage 3 (see Fig. 6 to Fig. 8). In the lure 1 having the passage 3 thus configured, the two or more sinkers 51, 52 do not vertically overlap each other during movement in the passage 3, and can move in a forward and rearward direction in the passage 3 in the longitudinally aligned state.

The stepped portion 4 is formed in the middle of the passage 3. The stepped portion 4 is formed by partially protruding the bottom of the passage 3 upward. The stepped portion 4 has a catching surface opposed to the front. The catching surface is opposed to the front end surface 39a of the passage 3.

With respect to the stepped portion 4, the passage 3 is conceptually divided into a first path 71 in front of the stepped portion 4, a second path 72, and a communicating path 73 that communicates the first path 71 with the second path 72. The first path 71 and the second path 72 extend in the first direction (in the illustrated example, forward and rearward direction). The first path 71 is a space between the front end surface 39a and the catching surface of the passage 3, and the second path 72 is a remaining space (except for the communicating path 73). Both of the first path 71 and the second path 72 are dimensioned to store the entire sinkers 51, 52. In particular, the first path 71 is dimensioned to generate a small gap between the front end surface 39a and the foremost sinker 52 in the state where all of the sinkers 51, 52 are stored therein. The communicating path 73 is an opening that connects the upper rear section of the first path 71 to the lower front section of the second path 72 at an upper end 41 of the stepped portion 4. The communicating path 73 is dimensioned to pass only one sinker therethrough. Strictly speaking, the passage 3 including the stepped portion 4 is bent at the stepped portion 4, and the first path 71 is vertically displaced from the second path 72. However, the passage 3 extends from the front to the rear of the body 2 as a whole. The stepped portion 4 protrudes upward from the bottom of the first path 71. The bottom of the first path 71 and the bottom of the second path 72 constitute a bottom 31a of the passage 3 (in other words, the bottom 31a of the passage 3 is configured of the bottom of the first path 71 and the bottom of the second path 72). That is, the bottom of the first path 71 is a part of the bottom 31a of the passage 3, and the bottom of the second path 72 is a remaining portion of the bottom 31a of the passage.

A protruding height 4H of the stepped portion 4 (see Fig. 5) is not particularly limited. However, when the height is too small, the catching surface may not perform its function of preventing the rearmost sinker 51 from shifting rearward after landing of the lure 1 on the water. From such viewpoint, the protruding height 4H of the stepped portion 4 is preferably one third of the diameter of the rearmost sinker 51 or more, more preferably a half of the diameter of the sinker 51 or more (radius of the sinker 51 or more), further preferably the diameter of the sinker 51 or more, and particularly preferably, 6/5 times of the diameter of the sinker 51 or more. The upper limit of the protruding height 4H of the stepped portion 4 is not particularly limited. However, when the protruding height 4H of the stepped portion 4 is large, the outer shape of the body 2 becomes large accordingly, obstructing the held sinker 51 to move rearward. For this reason, the protruding height 4H of the stepped portion 4 is preferably twice of the diameter of the rearmost sinker 51 or less, more preferably 3/2 times of the diameter of the sinker 51 or less, and further preferably 4/3 times of the diameter of the sinker 51 or less. The protruding height 4H of the stepped portion 4 refers to a length from the bottom 31a of the first path 71 to the upper end 41 of the stepped portion 4.

The catching surface is formed of the surface 6a of the retainer 6. It should be noted that "the catching surface is formed of the surface 6a of the retainer 6" does not mean that "the catching surface is formed of only the surface 6a of the retainer 6", but that "the catching surface is formed of at least the surface of the retainer".

Specifically, the stepped portion 4 has a recess 42 that can hold the retainer 6. A partition wall 44 having a hole 43 at its center is provided in front of the recess 42 such that the retainer 6 stored in the recess 42 does not come off the recess 42. That is, the stepped portion 4 has the partition wall 44. The thickness of the partition wall 44 is uniform. Accordingly, a surface 44a of the partition wall 44 is flat and substantially parallel to the surface 6a of the retainer 6. The partition wall 44 is preferably made of a material that does not prevent transmission of the magnetic attracting force therethrough. The partition wall 44 is made of the formation material for the body 2, for example. The diameter of the hole 43 of the partition wall 44 is smaller than a maximum length of the retainer 6. The retainer 6 is stored in a space surrounded with the recess 42 and the partition wall 44. The retainer 6 fitted into the recess 42 is supported with the partition wall 44 on its periphery and thus, does not come off the recess 42.

The partition wall 44 has the hole 43, and a part of the surface 6a of the retainer 6 fitted into the recess 42 is exposed on the passage 3 through the hole 43. In this embodiment, the catching surface is configured of the surface 6a of the retainer 6 and the surface 44a of the partition wall 44.

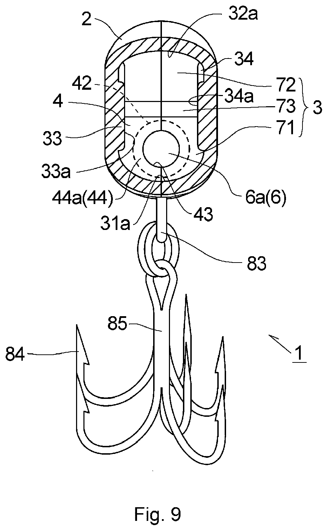

Fig. 9 is a view for clarifying the partition wall 44, the hole 43, and the retainer 6, with the sinker omitted from the sectional view in Fig. 7.

The catching surface is opposed to the front of the body 2. The catching surface is inclined relative to the bottom 31a of the first path 71. The catching surface is a face inclined relative to the bottom 31a. An inclination angle α of the catching surface (see the site represented by a dot-and-dash line in Fig. 5) is not particularly limited, and is one of an acute angle, right angle, and obtuse angle. The inclination angle of the catching surface refers to an angle that the surface 6a of the retainer 6, which is exposed through the hole 43, forms with the bottom 31a of the first path 71. Accordingly, for the catching surface having an acute inclination angle (not illustrated), the upper portion of the catching surface falls forward further than the lower portion of the catching surface. For the catching surface having an obtuse inclination angle, the upper portion of the catching surface falls rearward further than the lower portion of the catching surface. In the example illustrated in Fig. 4 and Fig. 5, the inclination angle of the catching surface relative to the bottom 31a of the first path 71 is about 90 degrees.

In the case where the inclination angle of the catching surface is set to an acute angle, the acute angle is not particularly limited. However, when the angle is too small, the sinker 51 held on the catching surface by the magnetic attracting force can leave the catching surface after landing on the water. For this reason, in the case where the inclination angle of the catching surface is set to an acute angle, the inclination angle is preferably 60 degrees or more and less than 90 degrees, and more preferably is 70 degrees or more and less than 90 degrees. In the case where the inclination angle of the catching surface is set to an obtuse angle, the obtuse angle is not particularly limited. However, when the angle is too large, the sinker 51 held on the catching surface by the magnetic attracting force can leave the catching surface after landing on the water. For this reason, in the case where the inclination angle of the catching surface is set to an obtuse angle, the inclination angle is preferably more than 90 degrees and 150 degrees or less, and more preferably more than 90 degrees and 140 degrees or less. In particular, to satisfactorily hold the sinker, the inclination angle of the catching surface is preferably 80 degrees or more and 150 degrees or less, more preferably 90 degrees or more and 140 degrees or less, and further preferably 90 degrees or more and 120 degrees or less.

An annular line connecting portion 81 for engaging a line (fishing line) is protrudingly provided outside at the front section of the body 2. For example, the line connecting portion 81 is constituted of one of rings formed of a substantially 8-shaped metal wire rod having a ring at each end. The line connecting portion 81 is protrudingly provided outside of the body 2 by engaging one ring with a support shaft in the body 2 while protruding the other ring of the metal wire rod, and fixing the middle part of the metal wire rod to a housing in the body 2.

An annular first hook connecting portion 82 for attaching a hook is protrudingly provided outside at the rear section of the body 2. Like the line connecting portion 81, the first hook connecting portion 82 is formed of a substantially 8-shaped metal wire rod, and is fixed to the body 2 in the same manner.

An annular second hook connecting portion 83 for attaching a hook is protrudingly provided outside at the lower middle section of the body 2 in the forward and rearward direction. Like the line connecting portion 81, the second hook connecting portion 83 is formed of a substantially 8-shaped metal wire rod.

Hooks 84, 85 attached to the first hook connecting portion 82 and the second hook connecting portion 83, respectively, are not particularly limited, and may be a combined hook including a plurality of hooks (for example, treble hook) as illustrated, or a single hook including only one hook.

A water stream resistive plate 86 is protrudingly provided outside at the lower front end of the body 2. The water stream resistive plate 86 is integral with the body 2. The water stream resistive plate 86 has a function of swinging the lure 1. That is, when the lure 1 is pulled in the water, a water stream hits against the water stream resistive plate 86, swinging the lure 1. However, the lure 1 of the present invention may not have such water stream resistive plate.

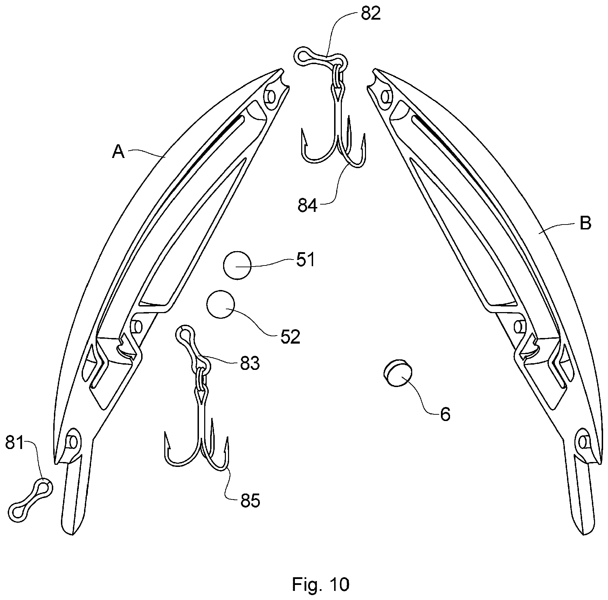

The body 2 is generally made by bonding a plurality of components to each other. For example, as illustrated in Fig. 10, the body 2 is formed by bonding a pair of bilateral symmetrical half components A, B to each other with an adhesive or the like. In the case of the body 2 made by bonding the pair of half components to each other, advantageously, the passage 3 can be readily formed in the body 2 and further, the retainer 6 and the sinkers 51, 52 can be readily stored in the passage 3. Fig. 10 illustrates all members constituting the lure 1 in the first embodiment (the half components A, B, the sinkers 51, 52, the retainer 6, the line connecting portion 81, the hook connecting portions 82, 83, and the hooks 84, 85).

As conventionally, in use of the lure 1 of the present invention, the line is engaged with the line connecting portion 81.

As illustrated in Fig. 3 and Fig. 4, in the lure 1, the rearmost sinker 51 is normally attracted and held on the surface 6a of the retainer 6, which constitutes the catching surface. In the state where the rearmost sinker 51 is held by the retainer 6, the sinker 52 other than the rearmost sinker is also held in the first path 71. In this state, the center of gravity of the lure 1 is deviated to the front. When the lure 1 is cast, the rearmost sinker 51 is shifted upward from the catching surface by the centrifugal force, and the rearmost sinker 51 leaves the retainer 6 and moves rearward in the passage 3. Simultaneously, like the rearmost sinker 51, the sinker 52 other than the rearmost sinker moves rearward in the passage 3 (see Fig. 11). In the case where the sinker 52 other than the rearmost sinker is made of the non-magnetic material, the sinker 52 smoothly moves from the first path 71 to the second path 72 through the stepped portion 4. Also in the case where the sinker 52 other than the rearmost sinker is made of a weakly-magnetized magnetic material, all of the sinkers 51, 52 smoothly move rearward by the centrifugal force at casting without being attracted to the retainer 6. Fig. 11 is a sectional view of the lure 1 in the state where all of the sinkers 51, 52 have moved rearward in the passage 3. The lure 1 in which all of the sinkers 51, 52 have moved rearward and the center of gravity is deviated to the rear achieves stable flight. Then, at landing of the lure 1 on the water, since the second path 72 has no retainer 6, the sinkers 51, 52 move forward in the passage 3, and enter from the communicating path 73 into the first path 71. When the rearmost sinker 51 enters into the first path 71, the sinker 51 is attracted to the retainer 6 by the magnetic attracting force, and is held on the catching surface (see Fig. 3). At this time, the sinker 52 other than the rearmost sinker, which is made of the non-magnetic material, is not attracted to the retainer 6. However, since the communicating path 73 is dimensioned to pass only one sinker therethrough, the rearmost sinker 51 closes the communicating path 73, such that the sinker 52 other than the rearmost sinker is held in the first path 71. All of the sinkers 51, 52 are held in the first path 71 (that is, all of the sinkers 51, 52 are held in the front section of the lure 1), and the center of gravity of the lure 1 after landing on the water is deviated to the front.

In the lure 1 of the present invention, the stepped portion 4 having the catching surface including the retainer 6 is formed in the middle of the passage 3. Since the catching surface is the inclined surface opposed to the front of the passage 3, due to the centrifugal force applied to the lure 1 at casting, the rearmost sinker 51 attracted to the catching surface rolls on the catching surface and is displaced. Thus, at casting of the lure 1 of the present invention, the sinkers 51, 52 reliably move rearward in the passage 3. After landing of the lure 1 on the water, the rearmost sinker 51 is held on the catching surface by the magnetic attracting force of the retainer 6 and further, is prevented from moving rearward by the catching surface inclined relative to the bottom of the first path 71. For this reason, after landing of the lure 1 of the present invention on the water, the sinkers 51, 52 are reliably held in the front section of the passage 3.

The lure of the present invention is not limited to the above embodiment, and may be modified in any manner within the scope of the present invention. Other embodiments will be described below, and the description of the same configurations and effects as those in the embodiment is omitted, and the same terms and reference numerals are used.

### <Second embodiment>

In the first embodiment, the lure in which two sinkers 51, 52 are stored in the passage 3 is exemplified, but three sinkers may be stored and four or more sinkers may be stored in the passage, for example.

Fig. 12 illustrates an example of the lure in which four sinkers 51, 52, 53, 54 are stored in the passage 3.

As in the first embodiment, it is preferable that among the sinkers, the rearmost sinker 51 is made of a magnetic material or magnet, and the sinkers 52, 53, and 54 other than the rearmost sinker are made of a non-magnetic material or a weakly-magnetized magnetic material. The length of the first path 71 of the passage 3 in the forward and rearward direction is set depending on the number of sinkers such that all of the sinkers can be stored in the first path 71.

Similarly, in the lure 1 in this embodiment, the stepped portion 4 having the catching surface opposed to the front of the body 2 is provided in the middle of the passage 3, and the surface 6a of the retainer 6 constitutes the catching surface. However, in the lure 1 in this embodiment, as in a below-mentioned fifth embodiment, the stepped portion 4 having the catching surface opposed to the front of the body 2 may be provided in the middle of the passage 3, and the retainer 6 may be provided on the inner side of the catching surface.

### <Third embodiment>

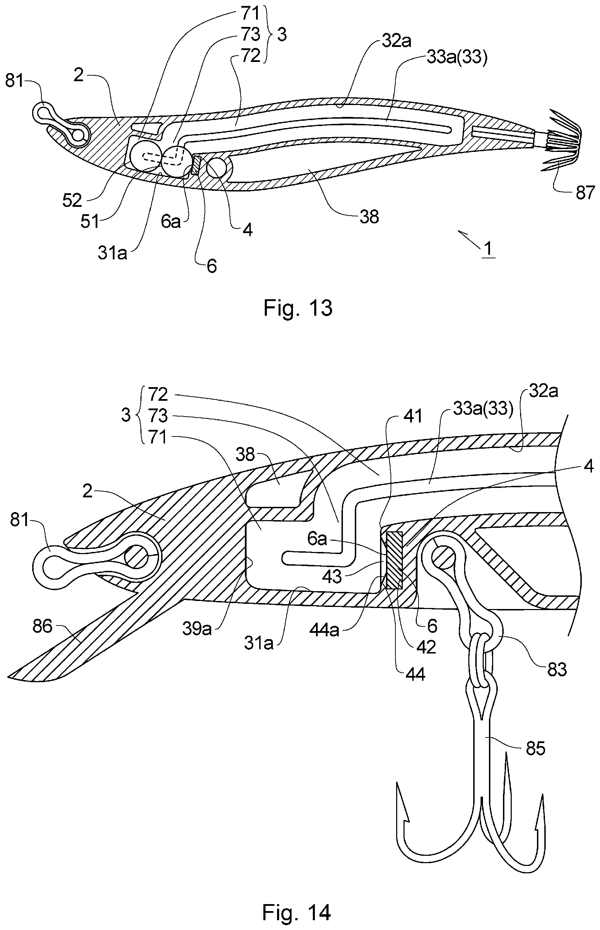

Although the lure 1 having the body 2 imitating a small fish is described in the first embodiment, for example, as illustrated in Fig. 13, the body 2 may be formed as a shrimp-like shape. The lure 1 having the body of such shape can be used as a lure for squid fishing.

Although the lure 1 in which the hook connecting portions 82, 83 are provided at the body 2 is exemplified in the first embodiment, as illustrated in Fig. 13, the lure 1 may not have the hook connecting portion. In this case, a hook 87 is directly fastened to the body 2. In the lure 1 illustrated in Fig. 13, the umbrella-like hook 87 including a plurality of hooks is inserted into the rear section of the body 2 and is fastened thereto with an adhesive. Although one umbrella-like hook 87 is attached to the body 2 in the illustrated example, two or more umbrella-like hooks may be attached to the body (not illustrated).

Similarly, in the lure 1 in this embodiment, the stepped portion 4 having the catching surface opposed to the front of the body 2 is provided in the middle of the passage 3, and the surface 6a of the retainer 6 constitutes the catching surface. However, in the lure 1 in this embodiment, as in a below-mentioned fifth embodiment, the stepped portion 4 having the catching surface opposed to the front of the body 2 may be provided in the middle of the passage 3, and the retainer 6 may be provided on the inner side of the catching surface.

### <Fourth embodiment>

The thickness of the partition wall 44 is uniform in the first embodiment, but it is not limited thereto. As illustrated in Fig. 14, the thickness of the partition wall 44 may gradually decrease toward the hole 43. The surface 44a of such partition wall 44 is inclined in a taper shape toward the hole 43. Since the surface 44a of the partition wall 44 is inclined in a taper shape, the sinker 51 attracted to the catching surface is fitted into the hole 43, and contacts the surface 44a of the partition wall 44. This can prevent the sinker 51 attracted to the catching surface from shifting horizontally and/or vertically, while the lure 1 is swimming.

Similarly, in the lure 1 in this embodiment, the stepped portion 4 having the catching surface opposed to the front of the body 2 is provided in the middle of the passage 3, and the surface 6a of the retainer 6 constitutes the catching surface. However, in the lure 1 in this embodiment, as in a below-mentioned fifth embodiment, the stepped portion 4 having the catching surface opposed to the front of the body 2 may be provided in the middle of the passage 3, and the retainer 6 may be provided on the inner side of the catching surface.

### <Fifth embodiment>

Furthermore, the lure 1 constituted by the surface 6a of the retainer 6 is exemplified in the first embodiment. However, the stepped portion 4 having the catching surface opposed to the front of the body 2 may be provided in the middle of the passage 3, and the retainer 6 may be provided on the inner side of the catching surface.

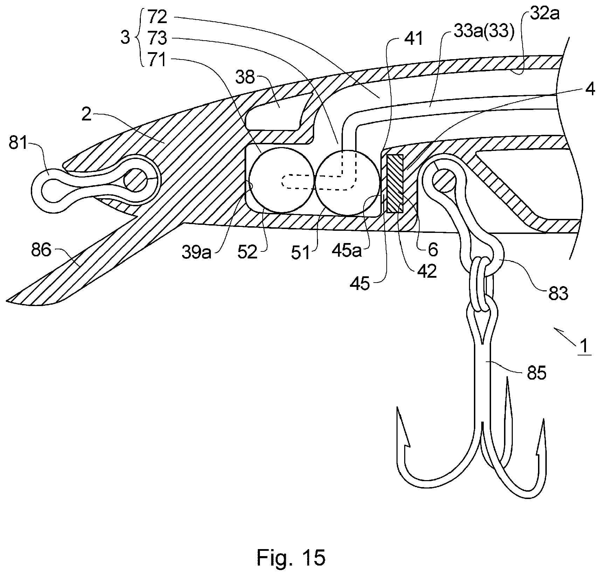

For example, as illustrated in Fig. 15, the retainer 6 may be provided in the inner side of the catching surface.

Specifically, the stepped portion 4 having the catching surface opposed to the front of the body 2 is protrudingly provided. As in the first embodiment, the recess 42 capable of storing the retainer 6 is formed in the stepped portion 4. The plate-shaped partition wall 45 is provided so as to entirely cover the front of the recess 42. That is, the partition wall 44 in the first embodiment has the hole 43, and in the fifth embodiment, however, the partition wall 45 which does not have the hole is provided in the front of the recess 42. The partition wall 45 is made of a material and thickness that does not prevent transmission of the magnetic attracting force therethrough. The retainer 6 is stored in a space surrounded with the recess 42 and the partition wall 45. Therefore, in the fifth embodiment, the retainer 6 is not exposed in the passage 3, and the catching surface is configured of the surface 45a of the partition wall 45. Here, the partition wall is a part of the stepped portion 4. Since the retainer 6 is provided in the inner side of the surface 45a of the partition wall 45 (that is, the catching surface), the rearmost sinker 51 in contact with the catching surface is attracted and held on the catching surface by a magnetic attracting force.

In the lure 1 of the fifth embodiment, as in the lure of the first embodiment, the sinkers 51, 52 reliably moves rearward in the passage 3 at casting, and the rearmost sinker 51 is reliably held in the catching surface after landing on the water.

### <Sixth embodiment>

A sixth embodiment illustrates variation of the lure including the catching surface inclined relative to the bottom of the first path in the first embodiment.

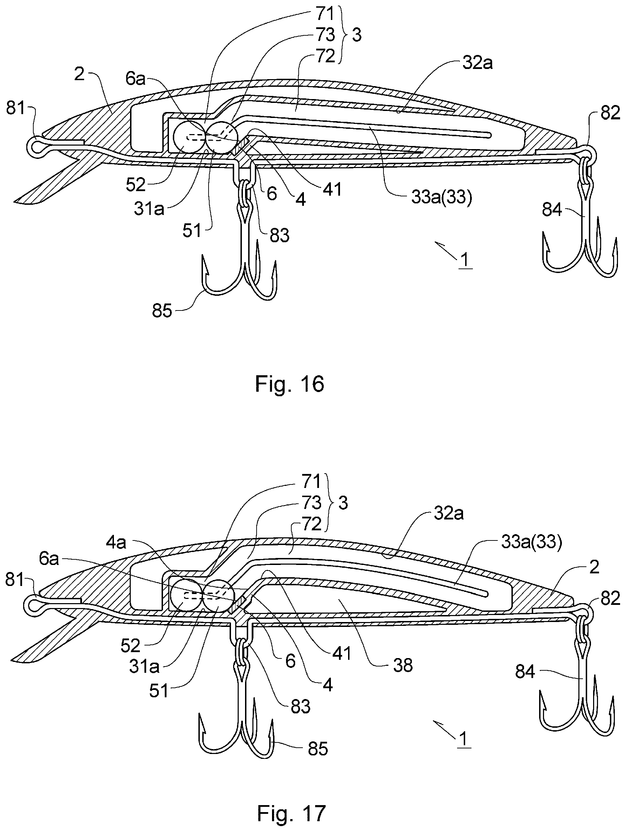

In a lure illustrated in Fig. 16, the catching surface is inclined at an obtuse angle relative to the bottom 31a of the first path 71 (the upper portion of the catching surface falls rearward further than the lower portion of the catching surface). Further, the second path 72 is moderately inclined downward toward the rear. The protruding height of the stepped portion 4 is a half of the diameter of the sinker 51 or more and the diameter of the sinker 51 or less. Here, the partition wall is not provided, and the catching surface is almost substantially configured of the surface 6a of the retainer 6 alone.

In a lure illustrated in Fig. 17, the catching surface is inclined at an obtuse angle relative to the bottom 31a of the first path 71. Further, the second path 72 is moderately inclined downward toward the rear. The protruding height of the stepped portion 4 is the diameter of the sinker 51 or more and 5/4 times of the diameter of the sinker 51 or less. No partition wall is provided, and the catching surface is configured of the surface 6a of the retainer 6 and the surface of the stepped portion 4.

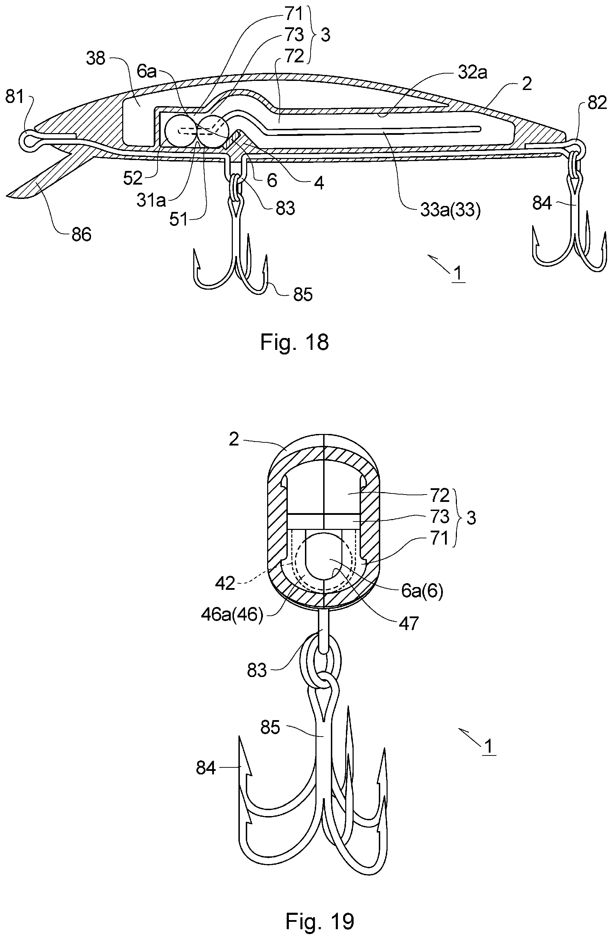

In a lure illustrated in Fig. 18, the catching surface is inclined at an obtuse angle relative to the bottom 31a of the first path 71. Although the first embodiment illustrates the lure 1 in which the first path 71 is vertically displaced from the second path 72, in the example illustrated in Fig. 18, the first path 71 and the second path 72 are aligned linearly in the first direction. In this case, the stepped portion 4 is formed by partially protruding the middle section of the passage 3. Here, the partition wall is not provided, the catching surface is almost substantially configured of the surface 6a of the retainer 6 alone.

Since the lure 1 illustrated in each of Fig. 16 to Fig. 18 has no partition wall, the entire surface 6a of the retainer 6 is exposed in the passage 3. In the lure 1 having no partition wall, the retainer 6 is fixed to the stepped portion 4 with a fixing means (for example, adhesive).

In the lure 1 in each example of the sixth embodiment, the catching surface is not necessarily configured of the surface 6a of the retainer 6. Instead, the stepped portion 4 having the catching surface opposed to the front of the body 2 may be provided in the middle of the passage 3 (refer to fifth embodiment).

In the lure 1 in each example of the sixth embodiment, as in the first embodiment, the partition wall may cover the surface 6a of the retainer 6.

### <Seventh embodiment>

As illustrated in Fig. 19, in a lure in a seventh embodiment, a partition wall 46 has a substantially U-like notch 47 in a front view. That is, as illustrated in Fig. 9, in the lure 1 in the first embodiment, the partition wall 44 has the hole 43, and a part of the surface 6a of the retainer 6 is exposed through the hole 43. In the lure 1 in the seventh embodiment, the partition wall 46 has the notch 47, and a part of the surface 6a of the retainer 6 is exposed through the notch 47. In the lure 1 in the seventh embodiment, the catching surface is configured of the surface 6a of the retainer 6 and a surface 46a of the partition wall 46.

### <Eighth embodiment>

In the lure in which two or more sinkers are stored in the passage in each of the embodiments, all of the sinkers have the same shape and dimension. However, at least two sinkers of the plurality of sinkers may have different shapes and dimensions, or have the same shape and different dimensions. In this case, the rearmost sinker is preferably the smallest sinker (lightest sinker).

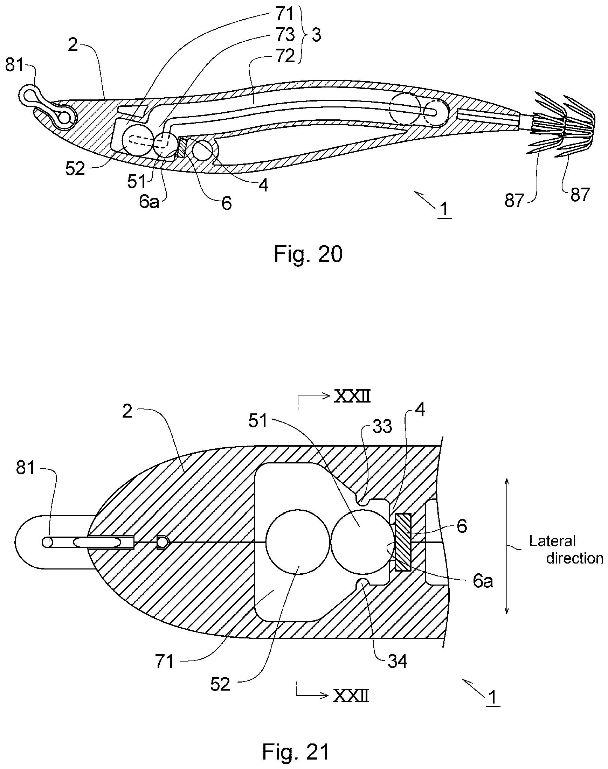

For example, in the lure 1 illustrated in Fig. 20, two sinkers 51, 52 are stored in the passage 3, and the rearmost sinker 51 is smaller and lighter than the other sinker 52. With such lure 1, in the state where the rearmost sinker 51 is attracted and held on the retainer 6 of the catching surface, the other sinker 52 is held in the first path 71. Since the sinker 52 other than the rearmost sinker is heavier than the rearmost sinker 51 in the lure 1, when all of the sinkers 51, 52 are held in the first path 71, the center of gravity of the lure 1 is deviated particularly to the front, which is preferable. A chain double-dashed line in Fig. 20 illustrates the state where the sinkers 51, 52 have moved rearward.

Although Fig. 20 illustrates the lure 1 having the body 2 imitating a shrimp-like shape, the body 2 may be a small fish-like shape. The two umbrella-like hooks 87 may be reduced to one, or a normal hook may be used in place of the umbrella-like hook 87.

### <Ninth embodiment>

In the lure 1 in each of the embodiments, the bottom of the first path 71 is protrudingly provided substantially parallel to the forward and rearward direction. However, for example, the bottom 31a of the first path 71 may have a part inclined relative to the forward and rearward direction (not illustrated). Alternatively, the entire bottom 31a of the first path 71 may be inclined relative to the forward and rearward direction (not illustrated).

### <Tenth embodiment>

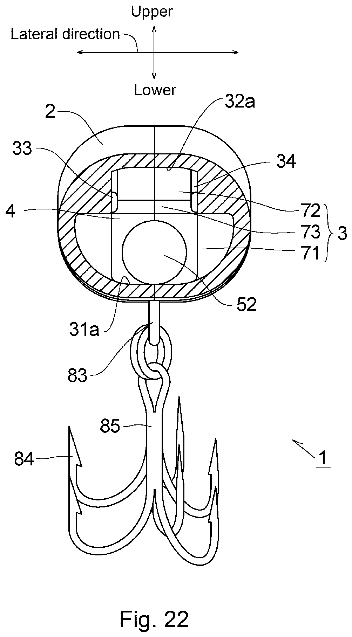

In the lure 1 in each of the embodiments, the width of the first path 71 (the length in a lateral direction of the first path 71) is slightly larger than the diameter of the sinker 52. However, for example, as illustrated in Fig. 21 and Fig. 22, the width of the first path 71 may be much larger than the diameter of the sinker 52. For example, the width of the first path 71 is in the range of 1. 5 to 4 times of the diameter of the sinker 52, preferably, in the range of 2 to 3 times of the diameter of the sinker 52. In the lure 1 having such first path 71, in the state where the rearmost sinker 51 is held in the retainer 6, the sinker 52 other than the rearmost sinker held in the first path 71 can move in the lateral direction in the first path 71. The sinker 52 moves in the lateral direction, enabling the lure 1 in this embodiment to swim differently from the lure in each of the embodiments.

### <Other embodiments>

Although various structures are described in any one of the first to tenth embodiments, one or more features selected from these embodiments may be replaced or combined with feature(s) in other embodiments.

The lure of the present invention is not limited to the lure in each of the embodiments, and may be modified in any manner within the scope of the present invention.

1 Lure, 2 Body, 3 Passage, 31a Bottom, 4 Stepped portion, 51, 52, 53, 54 Sinker, 6 Retainer, 6a, 44a, 45a, 46a Catching surface, 71 First path, 72 Second path, 73 Communicating path

## Claims

1. A lure (1) comprising:
a body (2);
a passage (3) extending in the body (2), the passage (3) having a bottom;
a single sinker (51) or two or more individual sinkers (51, 52) stored in the passage (3) to be movable in a forward and rearward direction; and
a retainer (6) capable of attracting the sinker (51) or the sinkers (51, 52) by a magnetic attractive force, the retainer (6) being made of a magnet or a magnetic material, wherein
a stepped portion (4) having a catching surface opposed to the front of the body (2) is provided in the middle of the passage (3),
the retainer (6) is provided on the inner side of the catching surface, or a surface of the retainer (6) constitutes the catching surface, wherein the retainer (6) is fixed to the stepped portion (4).

2. The lure (1) according to claim 1, wherein
the passage (3) has a first path (71) located in front of the stepped portion (4), a second path (72) located in rear of the stepped portion, and a communicating path (73) communicating the first path (71) with the second path (72), and
the catching surface is inclined relative to a bottom of the first path (71).

3. The lure (1) according to claim 2, wherein
the communicating path (73) is dimensioned to pass only one sinker (51, 52) therethrough.

4. The lure (1) according to claim 2 or 3, wherein
an inclination angle of the catching surface relative to the bottom is 90 degrees or more and 140 degrees or less.

5. The lure (1) according to any one of claims 1 to 4, wherein
two or more individual sinkers (51, 52) are stored in the passage (3) side by side in the forward and rearward direction, and
at least the rearmost sinker (51, 52) of the sinkers is made of a magnetic material or a magnet.

6. The lure (1) according to any one of claims 1 to 5, wherein the stepped portion (4) has a recess (42) in which the retainer (6) is fitted and a partition wall (44, 45) which is provided in front of the recess (42).

## Patentansprüche

1. Köder (1), der Folgendes umfasst:
einen Körper (2);
einen Gang (3), der sich in dem Körper (2) erstreckt, wobei der Gang (3) einen Boden hat;
ein Einzelsinkgewicht (51) oder zwei oder mehrere einzelne Sinkgewichte (51, 52), die in dem Gang (3) bevorratet sind, um in eine Vorwärts- und Rückwärtsrichtung beweglich zu sein; und
einen Halter (6), der imstande ist, das Sinkgewicht (51) oder die Sinkgewichte (51, 52) durch eine magnetische Anziehungskraft anzuziehen, wobei der Halter (6) aus einem Magnet oder einem magnetischen Material hergestellt ist, wobei
ein gestufter Abschnitt (4) mit einer Fangfläche, die der Vorderseite des Körpers (2) gegenüberliegt, in der Mitte des Gangs (3) bereitgestellt ist,
der Halter (6) auf der inneren Seite der Fangfläche bereitgestellt ist oder eine Fläche des Halters (6) die Fangfläche bildet, wobei der Halter (6) an den gestuften Abschnitt (4) befestigt ist.

2. Köder (1) nach Anspruch 1, wobei
der Gang (3) einen ersten Weg (71), der sich vor dem gestuften Abschnitt (4) befindet, einen zweiten Weg (72), der sich hinter dem gestuften Abschnitt befindet, und einen Verbindungsweg (73) hat, der den ersten Weg (71) mit dem zweiten Weg (72) verbindet, und
die Fangfläche in Bezug auf einen Boden des ersten Wegs (71) geneigt ist.

3. Köder (1) nach Anspruch 2, wobei
der Verbindungsweg (73) bemessen ist, damit nur ein Sinkgewicht (51, 52) hindurch verläuft.

4. Köder (1) nach Anspruch 2 oder 3, wobei
ein Neigungswinkel der Fangfläche in Bezug auf den Boden 90 Grad oder mehr und 140 Grad oder weniger beträgt.

5. Köder (1) nach einem der Ansprüche 1 bis 4, wobei zwei oder mehrere einzelne Sinkgewichte (51, 52) in dem Gang (3) nebeneinander in der Vorwärts- und Rückwärtsrichtung bevorratet sind und
mindestens das hinterste Sinkgewicht (51, 52) der Sinkgewichte aus einem magnetischen Material oder einem Magnet hergestellt ist.

6. Köder (1) nach einem der Ansprüche 1 bis 5, wobei der gestufte Abschnitt (4) eine Vertiefung (42), in der der Halter (6) eingepasst ist, und eine Trennwand (44, 45) hat, die vor der Vertiefung (42) bereitgestellt ist.

## Revendications

1. Leurre (1) comprenant :
un corps (2) ;
un passage (3) s'étendant dans le corps (2), le passage (3) ayant un fond ;
un seul plomb (51) ou deux plombs individuels (51, 52) ou plus stockés dans le passage (3) pour être mobiles dans une direction vers l'avant et vers l'arrière ; et
un dispositif de retenue (6) pouvant attirer le plomb (51) ou les plombs (51, 52) par une force d'attraction magnétique, le dispositif de retenue (6) étant réalisé avec un aimant ou un matériau magnétique, dans lequel :
une partie étagée (4) ayant une surface de prise opposée à l'avant du corps (2) est prévue au milieu du passage (3),
le dispositif de retenue (6) est prévu sur le côté interne de la surface de prise, ou une surface du dispositif de retenue (6) constitue la surface de prise, dans lequel le dispositif de retenue (6) est fixé sur la partie étagée (4).

2. Leurre (1) selon la revendication 1, dans lequel :
le passage (3) a une première trajectoire (71) située en face de la partie étagée (4), une seconde trajectoire (72) située à l'arrière de la partie étagée, et une trajectoire de communication (73) faisant communiquer la première trajectoire (71) avec la seconde trajectoire (72), et
la surface de prise est inclinée par rapport à un fond de la première trajectoire (71).

3. Leurre (1) selon la revendication 2, dans lequel :
la trajectoire de communication (73) est dimensionnée pour ne faire passer que seul plomb (51, 52).

4. Leurre (1) selon la revendication 2 ou 3, dans lequel :
un angle d'inclinaison de la surface de prise par rapport au fond est de 90 degrés ou plus et 140 degrés ou moins.

5. Leurre (1) selon l'une quelconque des revendications 1 à 4, dans lequel :
deux plombs individuels (51, 52) ou plus sont stockés dans le passage (3) côte à côte dans la direction avant et arrière, et
au moins le plomb situé le plus en arrière (51, 52) des plombs est réalisé avec un matériau magnétique ou avec un aimant.

6. Leurre (1) selon l'une quelconque des revendications 1 à 5, dans lequel la partie étagée (4) a un évidement (42) dans lequel le dispositif de retenue (6) est monté et une paroi de séparation (44, 45) qui est prévue en face de l'évidement (42).
